# EUROPÄISCHE PATENTSCHRIFT

(11) **EP 0 991 853 B1**
(45) Veröffentlichungstag und Bekanntmachung des Hinweises auf die Patenterteilung: **02.10.2002**
(21) Anmeldenummer: 98928254.6
(22) Anmeldetag: 13.05.1998
(51) Int. Cl.: F01N 7/00

(54) **VERFAHREN ZUR ÜBERWACHUNG DER KONVERTIERUNGSRATE EINES ABGASKATALYSATORS FÜR EINE BRENNKRAFTMASCHINE**
METHOD FOR MONITORING THE CONVERSION RATE OF AN EXHAUST GAS CATALYTIC CONVERTER FOR AN INTERNAL COMBUSTION ENGINE
PROCEDE POUR CONTROLLER LA VITESSE DE CONVERSION D'UN POT CATALYTIQUE DESTINE A UN MOTEUR A COMBUSTION INTERNE

(30) Priorität: 24.06.1997 DE 19726791
(43) Veröffentlichungstag der Anmeldung: 12.04.2000
(73) Patentinhaber: Volkswagen Aktiengesellschaft, 38436 Wolfsburg (DE)
(72) Erfinder: KAMMANN, Uwe, D-38378 Warberg (DE); LOECK, Harald, D-38442 Wolfsburg (DE)
(86) Internationale Anmeldenummer: EP9802805
(87) Internationale Veröffentlichungsnummer: WO98059159

(56) Entgegenhaltungen:
- DE-A- 4 211 092
- DE-A- 4 426 020
- DE-A- 4 433 988
- PATENT ABSTRACTS OF JAPAN vol. 097, no. 002, 28. Februar 1997 & JP 08 270438 A (TOYOTA MOTOR CORP), 15. Oktober 1996
- SIDERIS M.: "Methods for monitoring and diagnosing the Efficiency of Catalytic Converters - A Patent oriented Survey" Mai 1998 , ELSEVIER SCIENCE B.V. , THE NETHERLANDS XP002076999 siehe Seite 260, Absatz 1 - Seite 263, Absatz 1; Abbildungen 114,115

## Beschreibung

Die Erfindung betrifft ein Verfahren zur Überwachung der Konvertierungsrate eines einer Brennkraftmaschine zugeordneten Abgaskatalysators.

Die DE 44 33 988 A1 offenbart ein Katalysatorüberwachungsverfahren, weiches Abgastemperaturen stromauf und stromab des Katalysators erfaßt. Die Geschwindigkeit des Wärmeübergangs vom Abgas zum Katalysatormaterial wird ständig errechnet, daraus die Katalysatortemperatur und die Änderungsgeschwindigkeit dieser Katalysatortemperatur ermittelt.
Aus der Geschwindigkeit des Wärmeübergangs und der Änderungsgeschwindigkeit der Temperatur des Katalysators wird für eine bestimmte Zeitdauer der Quotient bestimmt, wobei die Zeitdauer vom Kaltstart der Brennkraftmaschine bis zum Erreichen der Umwandlungstemperatur des Katalysators gewählt ist. Aufgrund des zeitlichen Verlaufs des Quotienten wird ständig ein Trend für die Zeit bis zum Erreichen der Umwandlungstemperatur ermittelt. Die bis zum Erreichen der Umwandlungstemperatur verstrichene Zeit wird mit einem Schwellwert für diese Zeitdauer verglichen und bei Überschreiten des Schwellwerts ein Fehlersignal ausgegeben.

Eines der in DE 42 11 092 A1 offenbarten Verfahren basiert auf einer Temperaturabschätzung für den Katalysator auf der Basis eines Temperaturmodells. Hierbei wird für das Modell nach dem Erreichen der Umwandlungsbeginntemperatur und für die bei der Konvertierung entstehende Wärme ein gerade noch brauchbarer Katalysator angesetzt. Zur Nachbildung des Temperaturverhaltens des Katalysators wird hierbei zunächst die Wärmekapazität des Katalysators als bekannt angenommen und weiterhin die dem Motor zugeführte Wärmemenge abgeschätzt. Dies erfolgt durch Erfassen der dem Motor zugeführten Kraftstoffmenge und Berechnen des Anteils von Wärmeenergie, die dem Katalysator zugeführt wird. Hierbei hängt der Anteil an Wärmeenergie vom jeweiligen Lastzustand und der Drehzahl des Motors ab. Für vergleichsweise kleine Zeiteinheiten wird somit aus Kraftstoffmenge, Last und Drehzahl die Wärmemenge erfaßt, die dem Katalysator zugeführt wird. Diese Wärmemengen werden aufsummiert, um so eine Gesamtwärmemenge zu erhalten, die der Katalysator ab dem Start des Verfahrens erhält. Darüber hinaus wird noch die vom Katalysator an die Umgebung abgegebene Wärmemenge abgeschätzt. Die mit diesem Wärmemengenmodell abgeschätzte Temperatur wird abschließend mit seiner tatsächlichen Temperatur verglichen.
Dieses Verfahren, welches auch im Fahrbetrieb eines Fahrzeugs anwendbar sein soll, wird nur dann gestartet, wenn der Katalysator zu Beginn des Verfahrens etwa Umgebungstemperatur aufweist. Ab dem Start des Verfahrens wird mit Hilfe eines Temperaturmodellblocks unter Verwendung von Signalen der Last, Drehzahl, Einspritzzeiten, Lufttemperatur, Luftdruck und Oktanzahl des Kraftstoffs, eine Katalysatortemperatur abgeschätzt. Diese wird mit einer abgespeicherten Vergleichstemperatur verglichen. Anschließend wird noch untersucht, ob die Umwandlungstemperatur des Katalysators bereits erreicht ist.

Der Erfindung liegt die Aufgabe zugrunde, ein verbessertes Überwachungsverfahren für die Konvertierungsrate eines Abgaskatalysators einer Brennkraftmaschine anzugeben, welches eine erhöhte Diagnosegenauigkeit und eine Unabhängigkeit von der Katalysatorbeschichtung aufweist und darüber hinaus unabhängig von der Betriebsweise der Brennkraftmaschine nach einem Kaltstart ist.

Die Lösung dieser Aufgabe gelingt mit den Merkmalen des Patentanspruchs 1. Vorteilhafte Ausgestaltungen des Verfahrens sind in den abhängigen Ansprüchen benannt.

Das erfindungsgemäße Verfahren sieht vor, daß nach einem Kaltstart der Brennkraftmaschine die stromab des Abgaskatalysators aktuell vorliegenden Temperaturwerte während eines bestimmten Zeitfensters aufsummiert werden und dieser Summenwert mit einem vorbestimmten Grenzwert verglichen wird.
Diesem Verfahren liegt die Erkenntnis zugrunde, daß sich ein brauchbarer Katalysator von einem unbrauchbaren Katalysator während des bestimmten Zeitfensters dadurch unterscheidet, daß der bessere Katalysator zu einem früheren Zeitpunkt seine Umwandlungstemperatur erreicht und somit während der Dauer des Zeitfensters einen höheren Summenwert aufweist als ein schlechterer Katalysator.

Das Verfahren nutzt die Erkenntnis aus, daß sich die beiden genannten Katalysatoren vor Erreichen des Zeitfensters sowie nach Ablauf des Zeitfensters nicht signifikant voneinander unterscheiden und daher zur Auswertung das exakte Treffen des Zeitfensters von äußerster Wichtigkeit ist. Wesentlich ist weiterhin der Startzeitpunkt für das Zeitfenster, da ab diesem Zeitpunkt die Temperaturwerte kumuliert werden.
Nach jedem Kaltstart der Brennkraftmaschine kann der Beginn des Zeitfensters in Abhängigkeit von der Betriebsweise der Brennkraftmaschine festgelegt werden, d. h. es wird berücksichtigt, ob diese nahezu stationär oder vergleichsweise dynamisch betrieben wird. Diese Betriebsweise hat einen erheblichen Einfluß auf die in das Abgas eingebrachte Wärmemenge, welche letztendlich den Zeitpunkt des Erreichens der Umwandlungstemperatur bestimmt.
Hierdurch wird der Startzeitpunkt des Zeitfensters sowie auch die zeitliche Dauer des Zeitfensters betriebsweise abhängig festgelegt.

In vorteilhafter Ausgestaltung können die Abgastemperaturwerte stromauf des Abgaskatalysators entweder mit Hilfe eines Abgastemperaturmodelles innerhalb der Kontrolleinrichtung berechnet werden oder alternativ mit Hilfe eines Temperatursensors direkt erfaßt werden.

Weitere vorteilhafte Ausgestaltungen der Erfindung ergeben sich aus den abhängigen Ansprüchen und dem anhand einer Zeichnung nachfolgend näher erläuterten Ausführungsbeispiel der Erfindung. Hierbei zeigen:

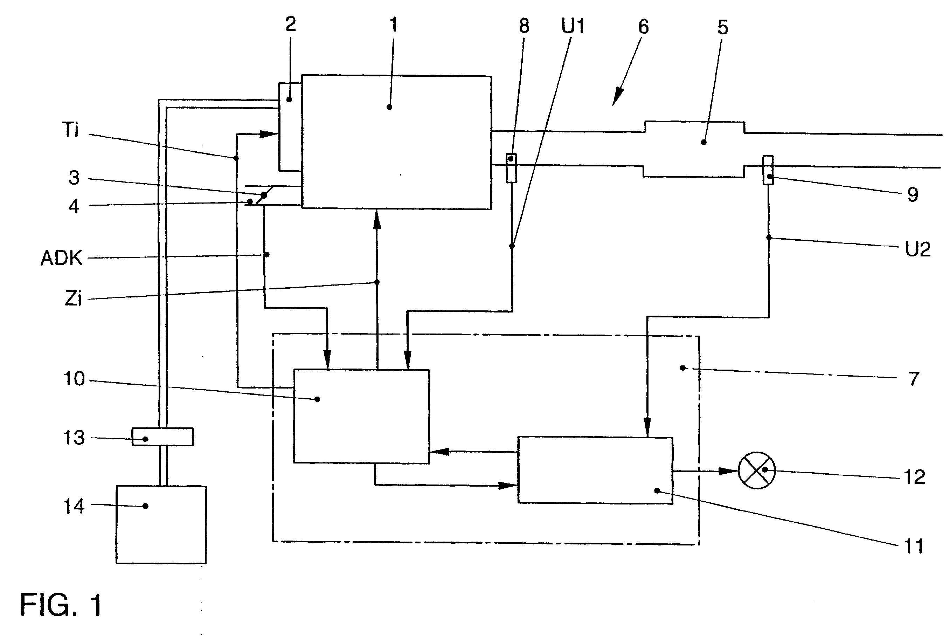

- Fig. 1: eine schematische Darstellung einer Brennkraftmaschine mit einem Abgasstrang und einer elektronischen Kontrolleinrichtung,
- Fig. 2: ein Diagramm des zeitlichen Verlaufs von Temperaturwerten und
- Fig. 3: eine schematische Übersicht über einen Teil der elektronischen Kontrolleinrichtung.

Eine Brennkraftmaschine 1 weist Einspritzdüsen 2, einen mit einer Drosselklappe 3 versehenen Lufteinlaß 4 sowie einen mit einem Katalysator 5 versehenen Abgasstrang 6 auf.

Eine als Motorsteuergerät ausgebildete elektronische Kontrolleinrichtung 7 empfängt Signale U1 eines zwischen Brennkraftmaschine 1 und Abgaskatalysator 5 eingesetzten ersten Temperatursensors 8 sowie Signale U2 eines stromab des Katalysators 5 eingesetzten zweiten Temperatursensors 9.

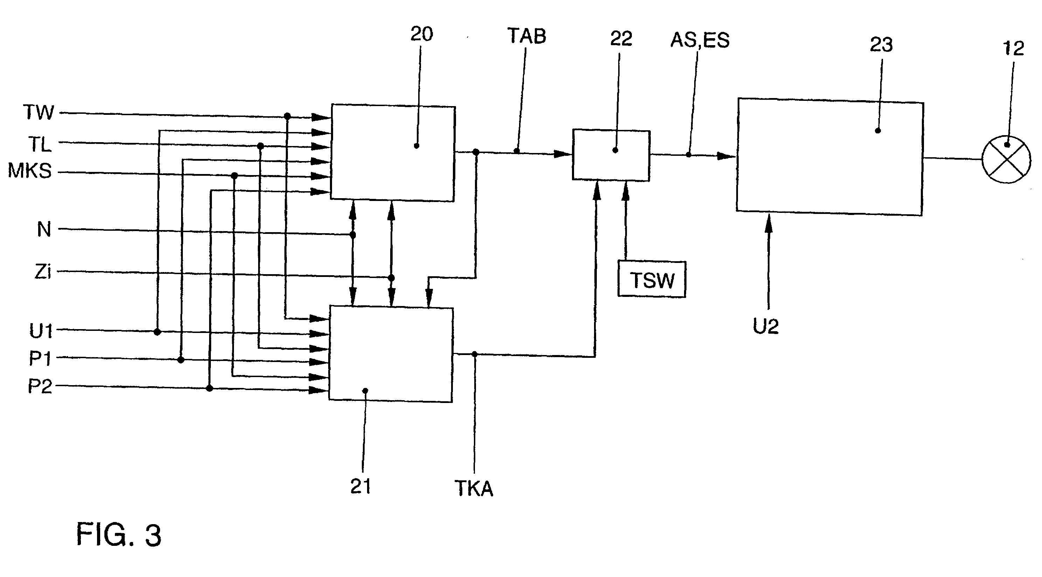

Ein Steuerblock 10 der Kontrolleinrichtung 7 empfängt das Signal U1, ein Drosselklappenwinkelsignal ADK und gibt Einspritzzeitensignale Tl sowie Zündwinkelsignale ZI an die Brennkraftmaschine 1 ab.
Die Kontrolleinrichtung 7 enthält weiterhin einen Überwachungsblock 11, dem die Signale U2 des ersten Temperatursensors 9 zugeführt werden und welcher mit dem Steuerblock 10 kommuniziert und ggf. eine Störfallsignalleuchte 12 betätigt. Dieser Überwachungsblock 11 ist im Zusammenhang mit Fig. 3 näher erläutert.

Im Betrieb der Brennkraftmaschine wird den Einspritzdüsen 2 mittels einer Kraftstoffpumpe 13 Kraftstoff aus einem Vorratsbehälter 14 zugeführt.

Der Überwachungsblock 11 besteht im Detail gemäß Fig. 3 aus einem Abgastemperaturmodell-Block 20, einem Katalysatortemperaturmodell-Block 21, einem Korrekturblock 22 und einem Auswerteblock 23.

Die den Blöcken 20 und 21 zugeführten Eingangsgrößen sind jeweils Signale für die Wassertemperatur TW, Lufttemperatur TL, Kraftstoffmassenstrom MKS, Brennkraftmaschinendrehzahl N, Zündwinkelsignale ZI, weitere Größen P1, P2.... sowie die Signale U1 und U2, die die aktuell erfaßten Temperaturwerte T_{vKat} stromauf des Abgaskatalysators 5 und T_{nKat} stromab dieses Abgaskatalysators 5 repräsentieren.

Das Verfahren läuft wie folgt ab:

Ein Kaltstart der Brennkraftmaschine 1 wird in an sich bekannter Weise durch Plausibilitätsüberprüfung von Werten für Kühlwassertemperatur und/oder Lufttemperatur oder Öltemperatur etc. festgestellt. Nach dem Feststellen dieses Kaltstarts wird mit Hilfe des Abgastemperaturmodell-Blocks 20 und des Katalysatortemperaturmodell-Blocks 21 unter Verwendung der vorbeschriebenen Parameter zunächst die Abgastemperatur TAB und anschließend die Katalysatortemperatur TKA geschätzt.
Hierbei wird in dem Abgastemperaturmodell-Block 20 für den Beginn der Schätzung der Wert für TAB gleich dem Wert der Wassertemperatur TW und der Lufttemperatur TL gesetzt. In vorbestimmten Zeitintervallen wird der zuvor ermittelte Wert von TAB ständig um einen Temperaturdifferenzwert erhöht, wobei für diesen insbesondere die den ersten Temperaturwert T_{vKat} signalisierende Größe U1, die erste Ableitung der Fahrgeschwindigkeit eines mit der Brennkraftmaschine 1 ausgestatteten Kraftfahrzeugs, die Drehzahl N, die Zündwinkelsignale ZI sowie die Kraftstoffqualität in Form der Oktanzahl eingeht.

Hierdurch wird bereits deutlich, daß die von diesem Abgastemperaturmodell-Block 20 abgeschätzte Abgastemperatur TAB ganz wesentlich vom Fahrzyklus, d. h. von der Betriebsweise des Kraftfahrzeugs, abhängt.

Zur Korrelation mit einer im Abgaskatalysator 5 vorliegenden Katalysatortemperatur TKA wird zeitgleich in dem Katalysatortemperaturmodell-Block 21 unter Verwendung der bereits erwähnten Parameter und der Abgastemperatur TAB die Temperatur im Bereich der Reaktionsfront des Substrats des Katalysators 5 geschätzt.
Der am Ausgang vorliegende Katalysatortemperaturwert TKA wird, ebenso wie der Ausgang des Abgastemperaturmodell-Blocks 20, dem Korrektorblock 22 zugeführt. Dieser nimmt eine Korrektur des Werts TAB unter Berücksichtigung vom Wert TKA zur Bildung eines Temperaturstartwerts TST vor.

Erreicht dieser ständig erneuerte Startwert TST einen vorgegebenen Temperaturschwellwert TSW, löst der Korrekturblock 22 ein Startsignal AS aus, welches dem Auswerteblock 23 zugeführt wird.

Der Temperaturschwellwert TSW ist ein empirisch ermittelter Temperaturwert, bei dessen Erreichen angenommen werden kann, daß ein neuwertiger Katalysator 5 zu konvertieren beginnt. Der in der Kontrolleinrichtung 7 abgelegte Wert für TSW kann adaptiv um eine Größe ergänzt werden, welche einen aktuell verbauten Katalysator 5 in dem Kraftfahrzeug berücksichtigt.

Mit Anliegen des Startsignals AS am Auswerteblöck 23 beginnt die Abarbeitung eines Summieralgorithmus zur Erfassung einer bestimmten Anzahl von Temperaturwerten T_{nKat}, die während eines vorbestimmten Zeitfensters stromab des Katalysators 5 durch den zweiten Temperatursensor 9 und weiterer Parameter ermittelt wird.

In vorbestimmten Zeitabständen werden ständig neue Temperaturwerte T_{nKat} erfaßt und während einer Zeitspanne dt des Zeitfensters zu einem Summenwert THC (=TT_{nKat}) summiert.

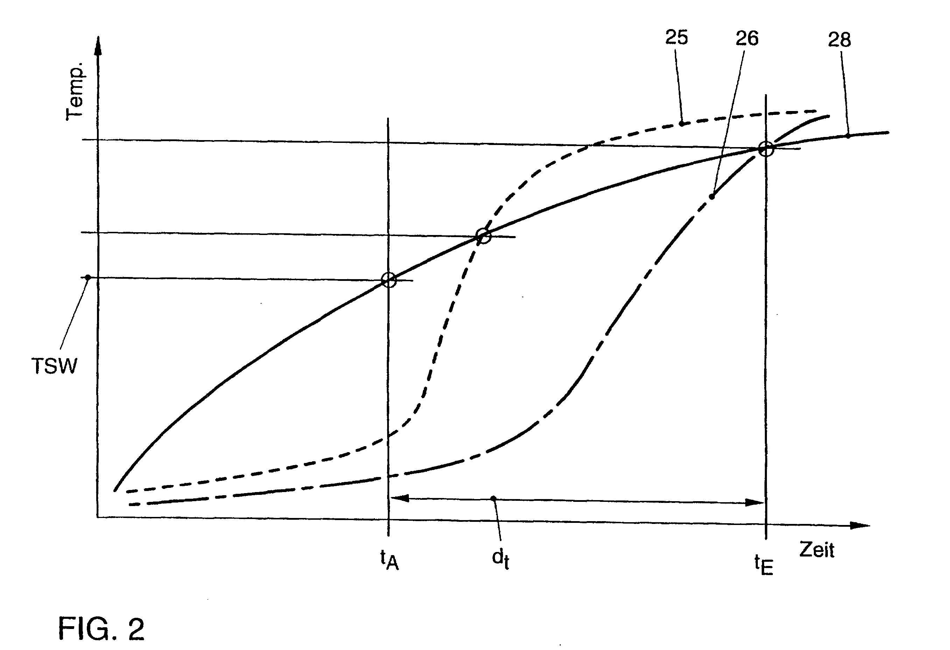

Fig. 2 zeigt den zeitlichen Verlauf der vom Temperatursensor 9 erfaßten Werte T_{nKat} im Abgas über der Zeit t und den zeitlichen Verlauf der Abgastemperatur T stromauf des Katalysators 5.

Eine Kurve 25 zeigt dabei den Temperaturverlauf für einen neuen, voll funktionstüchtigen Abgaskatalysator 5. Eine Kurve 26 zeigt einen entsprechenden Verlauf für einen bereits gealterten Katalysator 5. Erkennbar ist, daß sich unmittelbar nach einem Kaltstart bis zum Erreichen des Anfangszeitpunkts tA für das sich über die Zeitspanne dt erstreckende Zeitfenster keine signifikanten Unterschiede zwischen den Kurvenverläufen 25 und 26 ergeben. Dieser Zeitbereich ist somit für eine sichere Erkennung eines eventuell geschädigten Katalysators ungeeignet.
Eine Kurve 28 zeigt den zeitlichen Verlauf der Abgastemperatur T stromauf des Katalysators 5, in diesem Fall also den Abgastemperaturwert TAB. Mit Erreichen des Temperaturschwellwerts TSW werden ab dem Anfangszeitpunkt tA die Temperaturwerte T_{nKat} während der Zeitspanne dt zu einem Summenwert TT_{nKat} summiert.

Ein nach dem erstmaligen Starten der Brennkraftmaschine 1 mit dem jeweils eingesetzten Katalysator 5 ermittelte Summenwert TT_{nKat} 1 wird in der Kontrolleinrichtung 7 als Referenzwert gespeichert. Dieser kann zu Diagnosezwecken während eines Werkstattaufenthalts ausgelesen und zur Beurteilung der Güte des verwendeten Katalysators herangezogen werden.

Während der Lebensdauer der Kombination aus Brennkraftmaschine 1 und Abgaskatalysator 5 verschlechtern sich dessen Umwandlungseigenschaften unter anderem dahingehend, daß die für die Umwandlung erforderliche Temperatur zunimmt, d. h. schädliche Abgasemissionen nehmen zu.
Die Kurve 26 gemäß Fig. 2 zeigt den typischen Temperaturverlauf stromab eines solchen gealterten Katalysators. Die dem Summenwert TT_{nKat} entsprechende Fläche unterhalb des Kurvenverlaufs 26 im Rahmen des Zeitfensters ist signifikant kleiner als die unterhalb der Kurve 25.

Das Summieren der Temperaturwerte T_{nKat} wird beendet, wenn der Korrekturblock 22 ein Stopsignal ES an den Auswerteblock 23 abgibt. Das Ende des Zeitfensters wird bestimmt vom Anfangszeitpunkt ta und der Zeitspanne dt. Diese wiederum setzt sich zusammen aus einem empirisch ermittelten voreingestellten Mittelwert tM sowie einem von Parametern der Brennkraftmaschine 1 abhängigen Korrekturwert tK.

Die für die Ermittlung der Abgastemperaturwerte TAB, der Katalysatortemperaturwerte TKA und des Korrekturwerts tK herangezogenen Parameter sind solche, die insbesondere die Fahrweise, mit der das Kraftfahrzeug betrieben wird, berücksichtigen. Hierdurch wird der individuelle Fahrzyklus auf einen normierten Fahrzyklus zurückgeführt und kann mit solchen normierten Zyklen verglichen werden. Solche werden vom Gesetzgeber in verschiedenen Ländern der Erde beispielsweise als sogenannter FTP- oder auch MVEG-Zyklus vorgeschrieben. Diese vorgeschriebenen Zyklen weisen ein genau definiertes Geschwindigkeitsprofil über der Zeit auf, d. h. der Fahrzyklus ist exakt vorgegeben. Der Einfluß der fahrzyklusabhängigen Parameter, wie beispielsweise dem Kraftstoffmassenstrom MKS pro Zeiteinheit, macht sich verfahrensgemäß dahingehend bemerkbar, daß mit zunehmenden Werten für den Kraftstoffmassenstrom MKS pro Zeiteinheit die Zeitspanne dt verkürzt wird. Dieses ist insofern vorteilhaft, als daß die durch den erhöhten Kraftstoffmassenstrom MKS eingebrachte Energie den Katalysator 5 schneller aufheizt und infolge dessen der Kurvenverlauf 26 im Bereich des Zeitfensters in Fig. 2 nach links verschoben wird, so daß sich bei Beibehaltung der ursprünglichen Zeitspanne dt zunehmend der sich nicht signifikant unterscheidende Abschnitt der Kurvenverläufe 25 und 26 nach dem Endzeitpunkt tE bemerkbar machen würde.

Für eine weitere Verbesserung der Genauigkeit des Verfahrens kann in Abhängigkeit der fahrzyklusabhängigen Parameter beispielsweise mit zunehmendem Kraftstoffmassenstrom MKS pro Zeiteinheit der Anfangszeitpunkt tA in Richtung früh verschoben werden.

Im Auswerteblock 23 ist ein Grenzwert GTT für den Summenwert TT_{nKat} gespeichert. Dieser Grenzwert GTT kann beispielsweise länderspezifisch gesetzt werden und repräsentiert einen noch als tolerierbar erachteten Katalysator 5. Ergibt der Vergleich von TT_{nKat} und GTT das Erreichen eines bestimmten Abweichungswerts DT, wird ein Fehlersignal ausgelöst, welches nach einmaligem oder mehrmaligem Auftreten die Störfallsignalleuchte 12 ansteuert.

Vorteilhafterweise bietet das zuvor beschriebene Verfahren eine bessere Diagnosegenauigkeit als bisher bekannte Verfahren und ist darüber hinaus unabhängig von der Katalysatorbeschichtung; des weiteren können auch bleivergiftete Katalysatoren erkannt werden. Von entscheidender Bedeutung für das erfindungsgemäße Verfahren ist das Setzen des Startsignals AS sowie die Dauer der Zeitspanne dt.

Das erfindungsgemäße Verfahren vergleicht die stromab des Abgaskatalysators 5 vorliegenden Temperaturwerte T_{nKat} somit letztendlich gegen die insgesamt eingebrachte Wärmeenergie in den Abgasstrang. Diese tatsächlich eingebrachte Energie wird durch die fahrzyklusunabhängige Auswertung normiert und könnte in Fig. 2 gleichwertig auf der Abszisse anstelle der Zeit t aufgetragen werden. Das Verfahren erkennt funktionstüchtige Abgaskatalysatoren 5 in sicherer Weise über die Größe des Flächenintegrales unterhalb des Kurvenverlaufs 25 im Zeitfenster. Je größer dieses Flächenintegral ist, desto bessere Eigenschaften bezüglich der Konvertierungsrate weist der Abgaskatalysator 5 auf. Damit korreliert auch die vergleichsweise niedrige Lage des Schnittpunktes zwischen Kurvenverlauf 25
und 28, d. h. ein funktionstüchtiger Abgaskatalysator 5 weist einen signifikanten Abstand zu dem Schnittpunkt des bereits gealterten Katalysators, vgl. Kurvenverlauf 26 in Fig. 2, auf.

## Patentansprüche

1. Verfahren zur Überwachung der Konvertierungsrate eines Abgaskatalysators (5) für eine Brennkraftmaschine (1) mit einer elektronischen Kontrolleinrichtung (7), mit den Schritten:
a) Kaltstarten der Brennkraftmaschine (1),
b) Ermitteln eines stromauf des Abgaskatalysators (5) herrschenden Abgastemperaturwertes (TAB),
c) Erfassen der stromab und stromauf des Abgaskatalysators (5) vorliegenden aktuellen Temperaturwerten (T_{vKat}, T_{nKat}) des Abgases mittels jeweils eine stromab (9) und stromauf (8) des Abgaskatalysators (5) liegenden Temperatursensors für die Zeitdauer eines bestimmten Zeitfensters nach dem Kaltstart,
d) Summieren der stromab des Abgaskatalysators (5) vorliegenden aktuellen Temperaturwerte (T_{nKat}) während des Zeitfensters zu einem Summenwert (TT_{nKat}).
e) Vergleichen dieses Summenwertes (TT_{nKat}) mit einem Grenzsummenwert (GTT),
f) Auslösen eines Fehlersignales, wenn der Vergleich unter e) das Erreichen eines bestimmten Abweichungswertes (DT) ergibt,
g) Wobei im Schritt c) und d) in der Kontrolleinrichtung (7) für den Beginn des Zeitfensters durch
c1) Ermitteln eines Katalysator-Temperaturwertes (TKA) und,
c2) Korrigieren des Abgastemperaturwertes (TAB) mit dem Katalysatortemperaturwert (TKA) zu einem Temperaturstartwert (TST), dann in einem Schritt,
c3) ein Startsignal (AS) des Anfangszeitpunktes (tA) ausgelöst wird, wenn der Temperaturstartwert (TST) einen vorgegebenen Temperaturschwellwert (TSW) erreicht hat,
h) und wobei für das Ende des Zeitfensters zu einem Endzeitpunkt (tE) ein Stopsignal (ES) ausgelöst wird, wenn seit dem Anfangszeitpunkt (tA) eine Zeitspanne (dt) vergangen ist, welche sich aus einem voreingestellten Mittelwert (tM) und einem von den Parametern der Brennkraftmaschine abhängigen Korrekturwert (tK) zusammensetzt.

2. Verfahren nach Anspruch 1, wobei im erstmaligen, gemeinsamen Betrieb von Brennkraftmaschine (1) und Abgaskatalysator (5) der im Schritt d) ermittelte Summenwert (TT_{nKat}) als Referenzwert für die Güte des verwendeten Katalysators gespeichert wird.

3. Verfahren nach Anspruch 2, **dadurch gekennzeichnet, daß** der im Schritt c1) ermittelte Katalysator-Temperaturwert (TKA) in einem Katalysatortemperaturmodell-Block (21) der Kontrolleinrichtung (7) geschätzt wird.

4. Verfahren nach einem oder mehreren der vorhergehenden Ansprüche, **dadurch gekennzeichnet, daß** als Meßgröße wenigstens ein zu verarbeitender Betriebsparameter der Brennkraftmaschine 1, insbesondere vom Fahrzyklus abhängige Betriebsparameter, wie ein Kraftstoffmassenstrom (MKS) erfaßt werden.

5. Verfahren nach Anspruch 4, **dadurch gekennzeichnet, daß** mit zunehmenden Werten für den Kraftstoffmassenstrom (MKS) pro Zeiteinheit die Zeitspanne (dt) verkürzt wird.

6. Verfahren nach einem oder mehreren der vorhergehenden Ansprüche 1 bis 5, **dadurch gekennzeichnet, daß** mit zunehmenden Werten für einen Kraftstoffmassenstrom (MKS) der Anfangszeitpunkt (tA) in Richtung früh verschoben wird.

7. Verfahren nach Anspruch 1, **dadurch gekennzeichnet, daß** im Schritt b) der Abgastemperaturwert (TAB) direkt als der aktuelle Temperaturwert (T_{vKat}) mittels des stromauf des Abgaskatalysators liegenden Temperatursensors (8) erfaßt wird.

8. Verfahren nach Anspruch 1, **dadurch gekennzeichnet, daß** im Schritt b) der Abgastemperaturwert (TAB) in einem Abgastemperaturmodell-Block (20) der Kontrolleinrichtung (7) in Abhängigkeit von Betriebsparametern der Brennkraftmaschine 1 ermittelt wird.

9. Verfahren nach Anspruch 1, **dadurch gekennzeichnet, daß** im Schritt b) der Abgastemperaturwert (TAB) direkt als der aktuelle Temperaturwert (T_{vKat}) mittels des ersten Temperatursensors (8) erfaßt wird.

10. Verfahren nach Anspruch 1, **dadurch gekennzeichnet, daß** im Schritt b) der Abgastemperaturwert (TAB) in einem Abgastemperaturmodell-Block (20) der Kontrolleinrichtung (7) in Abhängigkeit von Parametern der Brennkraftmaschine (1) ermittelt wird.

## Claims

1. Procedure for monitoring the conversion rate of an exhaust catalyst (5) for an internal combustion engine (1) having an electronic control device (7), comprising the steps:
a) cold starting of the internal combustion engine (1),
b) determination of an exhaust-gas temperature value (TAB) prevailing upstream of the exhaust catalyst (5),
c) detecting of the current temperature values (T_{vcat}, T_{ncat}) of the exhaust gas present downstream and upstream of the exhaust catalyst (5) by means of a temperature sensor (9) located downstream and a temperature sensor (8) located upstream of the exhaust catalyst (5) for the duration of a specific time window after the cold start,
d) summating of the temperature values (T_{ncat}) currently present downstream of the exhaust catalyst (5) during the time window to give a sum value (TT_{ncat}),
e) comparison of this sum value (TT_{ncat}) with a limit sum value (GTT),
f) triggering of an error signal if the comparison under e) shows that a specific deviation value (DT) has been reached,
g) where the following operations are performed in step c) and d) in the control device (7) for the beginning of the time window
c1) determination of a catalyst temperature value (TKA) and,
c2) correction of the exhaust-gas temperature value (TAB) with the catalyst temperature value (TKA) to form a temperature start value (TST), then in one step,
c3) a start signal (AS) of the starting point (tA) is triggered if the temperature start value (TST) has reached a given temperature threshold value (TSW),
h) and where a stop signal (ES) is triggered for the end of the time window at an end time point (tE) when there has elapsed since the starting point (tA) a time span (dt) which is made up of a preset average value (tM) and a correction value (tK), dependent on the parameters of the internal combustion engine.

2. Procedure according to Claim 1, the sum value (TT_{ncat}) determined in step d) being stored as a reference value for the quality of the catalyst used the first time the internal combustion engine (1) is operated together with the exhaust catalyst (5).

3. Procedure according to Claim 2, **characterized in that** the catalyst temperature value (TKA) determined in step c1) is estimated in a catalyst temperature model block (21) of the control device (7).

4. Procedure according to one or more of the preceding claims, **characterized in that** at least one operating parameter of the internal combustion engine (1) which is to be processed, in particular an operating parameter dependent on the driving cycle, such as a fuel mass flow (MKS), is detected as the measured variable.

5. Procedure according to Claim 4, **characterized in that** the time span (dt) is shortened with increasing values for the fuel mass flow (MKS) per time unit.

6. Procedure according to one or more of the preceding Claims 1 to 5, **characterized in that** the starting point (tA) is shifted in the direction of early with increasing values for a fuel mass flow (MKS).

7. Procedure according to Claim 1, **characterized in that** in step b) the exhaust-gas temperature value (TAB) is detected directly as the current temperature value (T_{vcat}) by means of the temperature sensor (8) located upstream of the exhaust catalyst.

8. Procedure according to Claim 1, **characterized in that** in step b) the exhaust-gas temperature value (TAB) is determined in an exhaust-gas temperature model block (20) of the control device (7) as a function of operating parameters of the internal combustion engine (1).

9. Procedure according to Claim 1, **characterized in that** in step b) the exhaust-gas temperature value (TAB) is detected directly as the current temperature value (T_{vcat}) by means of the first temperature sensor (8).

10. Procedure according to Claim 1, **characterized in that** in step b) the exhaust-gas temperature value (TAB) is determined in an exhaust-gas temperature model block (20) of the control device (7) as a function of parameters of the internal combustion engine (1).

## Revendications

1. Procédé de contrôle de la vitesse de conversion d'un pot catalytique (5) pour un moteur à combustion interne (1), comprenant un dispositif de contrôle électronique (7), avec les étapes suivantes :
a) démarrage à froid du moteur à combustion interne (1),
b) saisie d'une valeur de la température des gaz d'échappement (TAB) régnant en amont du pot catalytique (5),
c) saisie des valeurs de température réelles (T_{vcat}, T_{ncat}) des gaz d'échappement qui apparaissent en aval et en amont du pot catalytique (5) au moyen de capteurs de température disposés respectivement en aval (9) et en amont (8) du pot catalytique (5) sur la durée d'une certaine fenêtre temporelle après le démarrage à froid,
d) sommation des valeurs de température réelles (T_{ncat}) apparaissant en aval du pot catalytique (5) au cours de la fenêtre temporelle pour arriver à une valeur de sommation (TT_{ncat}),
e) comparaison de cette valeur de sommation (TT_{ncat}) à une valeur de sommation limite (GTT),
f) déclenchement d'un signal de défaut lorsque la comparaison de e) indique que l'on a atteint une certaine valeur de déviation (DT),
g) où l'on déclenche, aux étapes c) et d) du dispositif de contrôle (7) pour le début de la fenêtre temporelle par :
c1) saisie d'une valeur de la température du catalyseur (TKA), et
c2) correction de la valeur de la température des gaz d'échappement (TAB) avec la valeur de la température du catalyseur (TKA) pour obtenir une valeur de départ de la température (TST), puis, en une étape,
c3) un signal de démarrage (AS) du temps de démarrage (tA), lorsque la valeur de départ de la température (TST) a atteint une valeur de seuil de température prédéterminée (TSW),
h) et où, pour la fin de la fenêtre temporelle à un moment terminal (tE), on déclenche un signal d'arrêt (ES) si, depuis le moment de départ (tA), il s'est écoulé un intervalle de temps (dt)qui se compose d'une valeur moyenne pré-établie (tM) et d'une valeur de correction (tK) dépendant de l'un des paramètres du moteur à combustion interne.

2. Procédé selon la revendication 1, dans lequel, lors du fonctionnement commun pour la première fois du moteur à combustion interne (1) et du pot catalytique (5), la valeur de sommation (TT_{ncat}) déterminée à l'étape d) est mémorisée comme valeur de référence pour la qualité du catalyseur utilisé.

3. Procédé selon la revendication 2, **caractérisé en ce que** la valeur de la température du catalyseur (TKA) déterminée à l'étape c1) est évaluée dans un bloc de modélisation de température du catalyseur (21) du dispositif de contrôle (7).

4. Procédé selon une ou plusieurs des revendications précédentes, **caractérisé en ce qu'**on saisit comme grandeur de mesure au moins un paramètre de commande à traiter du moteur à combustion interne 1, en particulier un paramètre de commande dépendant du cycle de conduite, tel qu'un débit massique de carburant (MKS).

5. Procédé selon la revendication 4, **caractérisé en ce que**, avec des valeurs croissantes pour le débit massique de carburant (MKS) par unité de temps, on raccourcit l'intervalle de temps (dt).

6. Procédé selon une ou plusieurs des revendications précédentes 1 à 5, **caractérisé en ce que**, avec des valeurs croissantes pour un débit massique de carburant (MKS), on décale le moment de départ (tA) dans la direction d'un fonctionnement prématuré.

7. Procédé selon la revendication 1, **caractérisé en ce que**, à l'étape b), la valeur de la température des gaz d'échappement (TAB) est saisie directement comme la valeur de température réelle (T_{vcat}) au moyen d'un capteur de température (8) se trouvant en amont du pot catalytique.

8. Procédé selon la revendication 1, **caractérisé en ce que**, à l'étape b), la valeur de la température des gaz d'échappement (TAB) est saisie dans un bloc de modélisation de température des gaz d'échappement (20) du dispositif de contrôle (7) en fonction de paramètres de fonctionnement du moteur à combustion interne 1.

9. Procédé selon la revendication 1, **caractérisé en ce que**, à l'étape b), la valeur de la température des gaz d'échappement (TAB) est saisie directement comme la valeur de température réelle (T_{vcat}) au moyen du premier capteur de température (8).

10. Procédé selon la revendication 1, **caractérisé en ce que**, à l'étape b), la valeur de température des gaz d'échappement (TAB) est saisie dans un bloc de modélisation de la température de gaz d'échappement (20) du dispositif de contrôle (7) en fonction de paramètres du moteur à combustion interne (1).
